# EUROPEAN PATENT APPLICATION

(11) **EP 1 285 815 A1**
(43) Date of publication of application: **26.02.2003**
(21) Application number: 02425465.8
(22) Date of filing: 16.07.2002
(51) Int. Cl.: B60R 3/02

(54) **Safety folding footboard for camper vans, caravans, and similar vehicles**

(30) Priority: 16.08.2001 IT MC20010085
(71) Applicant: Calcatelli, Roberto, 60015 Falconara Marittima (AN) (IT); Bolletta, Esuperanzio, 60015 Falconara Marittima (AN) (IT)
(72) Inventor: Calcatelli, Roberto, 60015 Falconara Marittima (AN) (IT); Bolletta, Esuperanzio, 60015 Falconara Marittima (AN) (IT)
(74) Representative: Baldi, Claudio

(57) **Abstract**

The present invention relates to a safety footboard for camper vans, caravans, and similar vehicles with living area. Being joined to two oscillating arms (2) that are pivoted to the lateral walls (4a) of the traditional step space (4), the footboard of the invention can pass from a completely external position under the steps, during which it acts as additional step, to a completely internal position over the steps, in which it is placed flush with the floor of the vehicle, acting as cover to prevent passengers from falling into the step space.

## Description

The present patent application relates to a safety folding footboard for installation in camper vans, caravans, ambulances and similar vehicles.

The manufacture of the invention has been devised in order to solve two specific problems that are faced when using vehicles which comprise a living area higher than the road surface.

The first problem is related to the difficulties that are normally faced when boarding the vehicle in view of the difference in height between the internal floor and the road surface.

When this difference is considerable, the vehicle is usually provided with one or more steps that allow passengers to reach the floor of the vehicle, it being generally provided that the steps are located in a suitable space (a small stairwell) on the perimeter of the floor, behind the access door.

The presence of this space on the border of the floor of the vehicle results in a second, perhaps more serious, problem. More precisely, while moving inside the vehicle, passengers may unintentionally fall into the step space and get injured.

It must be noted that devices or equipment capable to overcome the two aforementioned problems are not known.

The only solutions that are worth mentioning have been devised in order to overcome the difficulties related to the considerable difference in height between the road surface and the vehicle floor. These solutions are basically related to the presence of removable steps that can be extracted from suitable housings located under the vehicle platform every time the access door is opened.

However, it is known that these removable steps are not able to solve the second, and perhaps more serious, inconvenience, that is the one related to the dangerous presence of the step space under the vehicle floor.

As mentioned earlier, the invention is based on the idea of realising a device with two different functions according to its operation condition to be installed in the aforementioned types of vehicle.

The new device consists in a folding footboard designed to be pivoted with respect to an horizontal axis to the two vertical walls opposite the traditional step space of the vehicle.

Thanks to the pivoting mode and, most of all, to the structure of the two oscillating arms that support it, the footboard can pass from a completely external position at the end of its lower travel to a completely internal position at the end of its upper travel.

More precisely, at the end of its lower travel, the footboard stands out under the steps. In this way, it acts as additional step to facilitate the boarding of passengers from the road surface.

At the end of its upper travel, the footboard is placed on top of the steps, flush with the vehicle floor. In this way, it acts as cover for the step space. Thanks to its position, the footboard can perfectly integrate into the floor and, most of all, it can prevent passengers from falling into the step space.

In view of the folding nature of the footboard of the invention, it is easy to understand that its two opposite sides are designed to carry out two different functions (additional step and cover). For this reason, the two opposite sides have a different finish.

In particular, the side of the footboard that acts as additional step can be equipped with a grid or coated with resistant anti-slip material. On the other hand, the opposite side, that is the side that acts as cover for the step space, can be coated with the same coating material used for the floor of the vehicle for esthetical reasons.

For major clarity the description of the invention continues with reference to the enclosed drawings, which are intended for purposes of illustration and not in a limiting sense, whereby:
- Fig. 1 is an axonometric view showing the footboard of the invention in external position, acting as additional step;
- Fig. 2 is an axonometric view showing the footboard of the invention in internal position, acting as cover.

With reference to the aforementioned figures, the new footboard (1) of the invention is fixed to the lower end of two oscillating arms (2) that are pivoted with respect to pins (3) with horizontal axis to the vertical walls (4a) of the step space (4) of vehicles with living area.

The same figures show that the upper ends of the oscillating arms (2) are pivoted at the height of the first step very near the front longitudinal border (4b) of the step space (4).

At the same time it appears evident that each arm (2) is composed of two different sections (2a, 2b), of which the first section (2a) with through hole for the pivoting pin (3) is shorter and basically parallel to the footboard (1), while the second section (2b) is much longer and oblique to the first section (2a) and to the footboard (1).

The configuration of the two arms (2) is such that their alternate rotation can exactly bring the footboard (1) into the desired operating position.

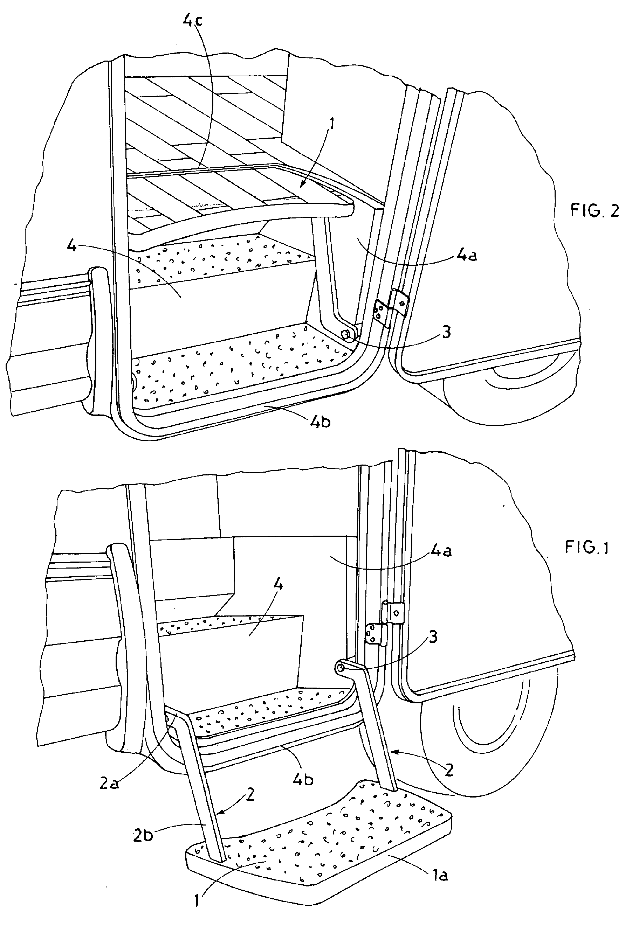

With specific reference to figure 1, when the two oscillating arms (2) rotate outwards, the footboard (1) is placed in external position under the step space (4). The interference between the oblique sections (2b) of the arms (2) and the front longitudinal border (4b) of the step space (4) represents the limit stop of the downward and outward rotation.

It appears evident that the inclination of the two longer sections (2b) of the oscillating arms (2) has been studied in such a way that the footboard (1) can be placed in a perfectly horizontal position when the interference occurs.

Figure 2 shows that the upward rotation of the two oscillating arms (2) allows the footboard (1) to fold by 180° and reach the top of the step space (4), in a completely internal position and perfectly flush with the vehicle floor.

Naturally, this position can be reached and maintained thanks to the limit stop created when the longitudinal border (1a) of the footboard (1) interferes with the upper longitudinal border (4c) of the step space (4).

This description shows that the footboard (1) can fold outwards only as long as the door in front of the step space (4) is open; at the same time it appears evident that the door cannot be closed until the footboard (1) of the invention is folded backwards towards the top of the step space(4).

The operating principle of the footboard (1) of the invention is very significant in that it allows for installation on vehicles (either existing or new vehicles) without undergoing any type of inspections.

It must be noted that in general vehicles with living area cannot be operated with the door open for safety reasons. In the case of a vehicle provided with the footboard (1) of the invention the door can not be closed if the footboard (1) has not been withdrawn inside the step space (4) behind the door.

Finally, it must be noted that in a simplified less expensive embodiment of the invention the footboard (1) can be folded manually, while in a more advanced embodiment the footboard (1) can be folded by means of servo controls.

Without referring to specific figures, it can be assumed that the step space (4) can be externally provided with a set of gear wheels joined to one of the pins (3) fixed to the oscillating arm (2) of the footboard (1).

In case of manual operation, the clockwise or counter-clockwise rotation of the pin (3) is carried out by means of a chain coupled with the set of gear wheels and actuated with a crank from the inside of the vehicle.

In case of assisted operation, the set of gear wheels is rotated in clockwise or counter-clockwise direction by means of a 12V motor powered by the vehicle battery. The motor is started by the user with a button located inside the vehicle and stops automatically when the footboard (1) has reached either one of the two final positions as detected by suitable sensors.

## Claims

1. Safety folding footboard for camper vans, caravans and similar vehicles, **characterised by** the fact that it is provided with a surface that closes the step space (4) exactly and **characterised by** the fact that it is fixed to the lower end of two oscillating arms (2) that are pivoted with respect to pins with horizontal axis (3) to the vertical walls (4a) of the step space (4) near the front longitudinal border (4b) of the step space (4); it being provided that each arm (2) is composed of two different sections (2a, 2b), of which the first section (2a) with through hole for the pivoting pin (3) is shorter and basically parallel to the footboard (1), while the second section (2b) is much longer and oblique to the first section (2a) and to the footboard (1); it also being provided that the oscillations of the arms (2) allow the footboard (1) to pass from a completely external position under the step space (4) - which is reached at the limit stop caused by the interference of the oblique sections (2b) of the arms (2) with the front longitudinal border (4b) of the step space (4) - to a completely internal position above the step space (4) - which is reached at the limit stop caused by the interference of the longitudinal border (1a) of the footboard (1) with the upper longitudinal border (4c)of the step space(4).

2. Footboard according to claim 1, **characterised by** the fact that the oscillations of the arms (2) are determined by rotating one or both pivoting pins (3) fixed with the arms (2).

3. Footboard according to claims 1 and 2, **characterised by** the fact that the pivoting pins (3) are rotated by means of sets of gear wheels coupled to a chain rotated in clockwise and counter-clockwise direction by means of a manually operated crank.

4. Footboard according to claims 1 and 2, **characterised by** the fact that pivoting pins (3) are rotated, with the interposition of sets of gear wheels, by means of an electric motor that is started with a button located inside the vehicle and stops automatically when the footboard (1) has reached either one of the two final positions as detected by suitable sensors.
